Europäisches Patentamt

European Patent Office

Office européen des brevets

(19)

(11) **EP 1 245 135 B1**

(12) **EUROPÄISCHE PATENTSCHRIFT**

(45) Veröffentlichungstag und Bekanntmachung des Hinweises auf die Patenterteilung:
**17.09.2003  Patentblatt 2003/38**

(21) Anmeldenummer: **00972537.5**

(22) Anmeldetag: **16.11.2000**

(51) Int Cl.⁷: **H05B 39/04**, G01J 1/42,
B60Q 1/14

(86) Internationale Anmeldenummer:
**PCT/CH00/00614**

(87) Internationale Veröffentlichungsnummer:
**WO 01/037616 (25.05.2001 Gazette 2001/21)**

(54) **STEUERUNG VON BELEUCHTUNGSANLAGEN**

CONTROL OF LIGHTING INSTALLATIONS

PROCEDE DE COMMANDE DE SYSTEMES D'ECLAIRAGE

(84) Benannte Vertragsstaaten:
**AT BE CH CY DE DK ES FI FR GB GR IE IT LI LU MC NL PT SE TR**

(30) Priorität: **17.11.1999  CH 208899**

(43) Veröffentlichungstag der Anmeldung:
**02.10.2002  Patentblatt 2002/40**

(73) Patentinhaber: **HTS High Technology Systems AG**
**8307 Effretikon (CH)**

(72) Erfinder:
 • **PFEIFFER, Walter, Karl**
 **72124 Pliezhausen (DE)**

 • **THÜR, Erich**
 **CH-9249 Algetshausen SG (CH)**

(74) Vertreter: **Patentanwälte Breiter + Wiedmer AG**
**Seuzachstrasse 2**
**Postfach 366**
**8413 Neftenbach/Zürich (CH)**

(56) Entgegenhaltungen:

| | |
|---|---|
| **DE-A- 2 421 063** | **DE-C- 4 428 278** |
| **FR-A- 2 769 557** | **GB-A- 2 020 420** |
| **US-A- 5 666 574** | |

EP 1 245 135 B1

**Beschreibung**

Die Erfindung bezieht sich auf ein Verfahren zur Bestimmung des Sonnenund/oder Kunstlichtanteils der spektralen Leistungsdichte in einem durch Sonnenlicht und Kunstlicht beleuchteten Raumvolumen mittels wenigstens eines in diesem Bereich angeordneten Sensors und/oder Filters, wobei die erzeugten Signale von einer Recheneinheit gespeichert und ausgewertet werden. Weiter betrifft die Erfindung Anwendungen des Verfahrens.

Die Sonne ist ein Temperaturstrahler mit einem Spektrum, das nur annähernd demjenigen eines schwarzen Körpers entspricht. Die Strahlungsleistung der Sonne beträgt ausserhalb der Erdatmosphäre etwa 1370 W/m$^2$. Auf Meereshöhe werden wegen der Absorption durch die Erdatmosphäre auch bei senkrechtem Einfallswinkel nur 60 bis 70% dieses Wertes gemessen.

In jedem Raum mit Fensteröffnungen ergeben sich grundsätzlich drei Situationen:

- Tagsüber kann das Sonnenlicht für eine genügende Beleuchtung ausreichend sein, dann muss kein künstliches Licht eingeschaltet werden.
- Nachtsüber wird der Raum ausschliesslich von künstlichem Innenlicht beleuchtet, das von aussen eindringende Streulicht ist in der Regel vernachlässigbar.
- In der Dämmerung und insbesondere auch bei ungenügendem Tageslicht ergeben das Sonnenlicht und das eingeschaltete Kunstlicht eine vorgegebene spektrale Leistungsdichte bzw. Beleuchtungsstärke, welche nicht unterschritten werden darf.

Zunehmendes Interesse an Energieeinsparungen führen auch zu Beleuchtungssteuerungen, die in Abhängigkeit vom aktuell vorhandenen natürlichen Tageslicht den Einsatz von Kunstlicht steuern. In grösseren Gebäuden wird diese Steuerung zunehmend gesetzlich vorgeschrieben, z.B. müssen Beleuchtungsanlagen im Kanton Zürich ab 5 bis 6 kVA mit einer tageslichtabhängigen oder gleichwertigen Bedarfsregelung versehen sein.

Bei Motorfahrzeugen sind es überwiegend Sicherheits-Aspekte, die ein rechtzeitiges Einschalten der Scheinwerferanlagen, insbesondere bei Einbruch der Dämmerung, erforderlich machen. Auch in diesem Fall ist eine genauere Kenntnis des tatsächlich vorhandenen Tageslichtes, unter Ausschluss von Störlicht, z.B. von Strassenbeleuchtungsanlagen oder von den Scheinwerfern anderer Motorfahrzeuge, erforderlich.

Es sind mehrere Verfahren bekannt, welche eine optimale Steuerung des Anteils von Kunstlicht an der spektralen Leistungsdichte (energetische Grösse) bzw. an der Beleuchtungsstärke (photometrische Grösse), welche das Sonnenlicht einschliesst, erlauben.

In der EP,A1 0871104 wird eine Beleuchtungs-Steuereinrichtung für einen Raum mit zahlreichen Beleuchtungsgeräten beschrieben. Ein Beleuchtungsstärke-Sensor ist installiert. Dieser misst die Gesamtbeleuchtungsstärke, welche sich aus Tageslicht und Kunstlicht ergibt, und gibt ein entsprechendes Signal an eine Kontrolleinheit ab, welche nach einer ersten Betriebsart die Gesamtbeleuchtungsstärke konstant hält. Nach einer zweiten Betriebsart können die Beleuchtungsgeräte mit einer wählbaren konstanten Leuchtstärke betrieben werden.

Die DE,A1 3925151 beschreibt ein Verfahren und eine Schaltungsanordnung zur Anpassung der Lichtstärke des Kunstlichtes eines mit Innenlicht und Aussenlicht beleuchteten Raumes an das sich mit der Tageszeit ändernde Aussenlicht. Die Lichtstärke des Innenlichtes wird nach einer vorgegebenen Funktion in Abhängigkeit von wenigstens einem Parameter gesteuert. Diese Funktion ist nach individuellem Empfinden veränderbar. Die Funktion wird durch eine Mehrzahl von unabhängig voneinander einstellbaren Funktionswerten bestimmt, wobei jeder Funktionswert unabhängig von anderen Funktionswerten veränderbar ist.

In der EP,A2 0563696 wird mit einem zum Ein- und Ausschalten der Beleuchtung vorgesehenen Lichtsensor die Differenz der Beleuchtungsstärke vor und nach dem Abschalten der künstlichen Lichtquellen berechnet. Diese Differenzbildung mit Hilfe eines Mikroprozessors kann über mehrere Abschaltperioden gemittelt und damit der Wert der künstlichen Beleuchtungsstärke selbstlernend ermittelt werden. Eine ständige Anpassung der Schwellenwerte zum Ein- und Abschalten der Lichtquellen an die variierenden Reflexionsgrade im Raum ist möglich.

In der FR, A1 2769557 wird ein automatisches Ein-/Ausschaltsystem eines Automobils mit wenigstens zwei lichtempfindlichen Messfühlern beschrieben, welche Ausgänge zur getrennten Analyse von natürlichen und künstlichem Licht in der gesamten Leistungsdichte haben. Das Ein- und Ausschalten der Beleuchtung ist nur von der Analyse des natürlichen Lichtanteils abhängig.

Auch die DE, A1 2421063 betrifft ein automatisches Ein-/Ausschaltsystem für Automobile. Die Ansprechschwelle liegt im UV-Bereich, insbesondere bei mit einer Zinnoxidzelle erzeugten 3200 bis 3600 Å. In diesem Bereich stört eine Kunstlichteinstreuung praktisch nicht, das Ein- und Ausschalten erfolgt ausschliesslich aufgrund des natürlichen Lichtes.

Die GB, A 2020420 beschreibt ein Verfahren zur Alarmauslösung mit dem Einsatz von zwei Sensoren, welche auf zwei in einem Spektrum von Kohlenwasserstoffabstrahlung charakteristischer Wellenlagen abgestimmt sind.

Dies erlaubt, die Unterscheidung von Kohlenwasserstoff- und Hintergrundstrahlung, die beispielsweise von Sonnen- oder Kunstlicht verursacht wird. Zur Auslösung eins Aktuators muss auf zwei engen Banden verschiedener Wellenlänge ein bestimmtes Intensitätsniveau erreicht sein, wobei diese Intensitäten nicht gleich gross sein dürfen.

Die US, A 5666574 offenbart den Einsatz von zwei Sensoren, welche eine unterschiedliche spektroskopische Empfindlichkeit haben. Der eine Sensor hat in einem engeren Wellenlängenbereich eine höhere spektroskopische Empfindlichkeit, der andere Sensor in einem breiteren Wellenlängenbereich. Dadurch kann in einem optischen Übertragungssystem die Hintergrundstrahlung unterdrückt werden.

Eine Vorrichtung nach der DE, C1 4428278 gibt ein Warnsignal ab, wenn trotz hinreichendem Tageslicht die Beleuchtung eingeschaltet ist. dabei wird das Licht in den natürlichen, zeitlich nicht in der Intensität modulierten, und den künstlichen, zeitlich mit der doppelten Netzfrequenz modulierten Anteil zerlegt. Die Vorrichtung ist als netzunabhängiges Batteriegerät ausgebildet und mit einem Mikrokontroller gesteuert.

Bekannte Lösungen zur Steuerung von Beleuchtungsanlagen mit infolge wechselnder Bewölkung, im Verlauf des Jahres und/oder im Verlauf des Tages wechselndem Sonnenlichtanteil haben wenigstens einen der folgenden Nachteile:

- Ein Sensor für das Gesamtgebäude kann individuellen Gegebenheiten nicht Rechnung tragen, diese bleiben unberücksichtigt. Individuelle Gegebenheiten sind beispielsweise die Grösse und Orientierung der Fenster, unterschiedliche Beschattungssituationen durch Bäume und die individuelle Raumbelegung.

Die Erfassung von Änderungen beim Schaltvorgang, wie in der EP,A2 0563696 beschrieben, kann bei Störlicht von zusätzlichen Lichtquellen, wie beispielsweise Schreibtischleuchten, die von Raumnutzem individuell bedient werden, zu Fehlverhalten führen. Die Raumbeleuchtung schaltet beim Einschalten von Schreibtischleuchten ab. Einfache spektrale Messungen, wie in der Broschüre "Grundlagen der HTS Präsenzmelder" der Firma HTS High Technology Systems AG, CH-8307 Effretikon, im April 1999 beschrieben, sind nur eingeschränkt tauglich, da sie den Einsatz von spezifischen Leuchtquellen wie Fluoreszenzleuchten voraussetzen, und beispielsweise bei Glühbirnen- oder Halogenlampenlicht versagen.

- Keines der bis anhin bekannten Verfahren eignet sich für die zuverlässige Steuerung der Scheinwerferanlagen von Motorfahrzeugen.

Der vorliegenden Erfindung liegt die Aufgabe zugrunde, ein Verfahren der eingangs genannten Art zur Bestimmung des jeweiligen Anteils der spektralen Leistungsdichte in einem von Kunstlicht und Sonnenlicht beleuchteten Bereich zu schaffen, welches einfach durchzuführen ist und unabhängig von der Art des Kunstlichtes exakte Ergebnisse ergibt.

Die Aufgabe wird erfindungsgemäss nach dem Kennzeichen von Patentanspruch 1 gelöst. Spezielle und weiterführende Ausbildungsformen des Verfahrens ergeben sich aus den abhängigen Patentansprüche.

Die Strahlungsleistung $\phi_e$, auch Strahlungsfluss genannt, ist die Leistung, welche von der Sonne oder von einer Kunstlichtquelle in Form einer Strahlung übertragen wird. Wird "spektral" vor "Strahlungsleistung" oder einen anderen optischen Begriff gesetzt, meint man diesen Begriff in bezug auf eine bestimmte Wellenlänge $\lambda$ oder auf ein bestimmtes Wellenlängenintervall $d\lambda$. Jede Strahlung der Wellenlänge $\lambda$ hat eine entsprechende Frequenz $\nu$, welche umgekehrt proportional zu $\lambda$ ist.

Die spektrale Strahlungsleistung $\phi_{e\lambda}$ ist eine energetische Grösse [W/nm], sie ergibt sich, wenn man die Strahlungsleistung $d\phi_e$ eines Schmalbandfilters auf den Bereich $d\lambda$ bezieht.

$$\phi_{e\lambda} = \frac{d\phi_e}{d\lambda}$$

Die spektrale Leistungsdichte $I_\lambda$, eine energetische Grösse, ist die spektrale Strahlungsleistung $\phi_{e\lambda}$ pro Empfängerfläche A des Sensors:

$$I_\lambda = \frac{\phi_{e\lambda}}{A} \; [W/(nm.m^2)]$$

Die spektrale Leistungsdichte erzeugt die Beleuchtungsstärke E, welche dem Helligkeitseindruck entspricht, den eine beleuchtete Fläche bewirkt. Die Beleuchtungsstärke ist die photometrische Grösse der Leistungsdichte und wird in Lux [W/m²] gemessen.

Erfindungsgemäss misst wenigstens ein Sensor die spektralen Leistungsdichten $I_1$ und $I_2$ bei zwei charakteristischen Absorptionsbanden, dann wird mittels einer Konstanten $\gamma$, dem Quotienten der spektralen Leistungsdichten $I_{S1}$ und $I_{S2}$ des Sonnenlichtes bei $\lambda_1$ und $\lambda_2$, und einer Konstanten $\delta$, dem Quotienten der entsprechenden spektralen Leistungsdichten $I_{K1}$ und $I_{K2}$ des Kunstlichtes, eine spektrale Leistungsdichte des Sonnenlichtes und/oder des Kunstlichtes berechnet.

Es wird also die Tatsache ausgenützt, dass Sonnenlicht beim Passieren der Erdatmosphäre spektral verändert wird, weil charakteristische Absorptionsbanden von in der Atmosphäre vorhandenen Gasmolekülen die spektrale Leistung des Sonnenlichtes auf den zugehörigen Wellenlängen in charakteristischer Weise reduzieren. Kunstlicht erfährt beim Durchqueren der Atmosphäre in einem Raum grundsätzlich dieselbe Veränderung, aber aufgrund der um mehrere Grössenordnungen kleineren zurückgelegten Wegstrecken ist die Änderung im Gegensatz zum Sonnenlicht praktisch nicht nachweisbar.

Für die an der Erdoberfläche gemessene spektrale Leistungsdichte des Sonnenlichts gilt:

$$I_S = I_{So} \cdot e^{-\mu x} \qquad (1)$$

wobei

$I_S =$ spektrale Leistungsdichte des Sonnenlichts S an der Erdoberfläche, üblich gemessen in W/$(m^2 \cdot nm)$

$I_{So} =$ spektrale Leistungsdichte des von der Sonne abgestrahlten Lichtes vor dem Eintritt in die Erdatmosphäre

$\mu =$ von der Wellenlänge $\lambda$ abhängiger Absorptionskoeffizient der Erdatmosphäre bzw. deren Gasmoleküle

$x =$ zurückgelegte Strecke in der Erdatmosphäre

Für das Verhältnis von je zwei spektralen Leistungsdichten $I_{S1}$, $I_{S2}$ von Sonnenlicht S der Wellenlängen $\lambda_1$ und $\lambda_2$ ergibt sich:

$$\gamma = \frac{I_{S1}}{I_{S2}} = \frac{I_{S10}}{I_{S20}} \cdot e^{-(\mu 1 - \mu 2)x} = \text{const.} \qquad (2)$$

Dieses Verhältnis $\gamma$ ist konstant (const.), weil

- die spektrale Leistungsdichte $I_{S10}$, $I_{S20}$ des von der Sonne emittierten Lichtes bei den Wellenlänge $\lambda_1$ und $\lambda_2$ sich nicht ändert.
- die für die jeweiligen Wellenlängen $\lambda_1$ und $\lambda_2$ geltenden Absorptionskoeffizienten $\mu_1$ und $\mu_2$ konstant sind
- die zurückgelegte Wegstrecke $x$ in der Atmosphäre für die beiden Wellenlängen $\lambda_1$, $\lambda_2$ gleich ist.

Die Änderung von $x$ über die Jahres- und Tageszeit ist bekannt und kann entsprechend rechnerisch berücksichtigt werden. Die Höhe des Sonnenstandes über die Zeit bestimmt die zurückgelegte Wegstrecke in der Erdatmosphäre.

Die Unterscheidung zwischen Kunstlicht K und Sonnenlicht S basiert auf dem Unterschied der zurückgelegten Weglänge $x$:

Sonnenlicht: $x \cong 4 \cdot 10^5$ m
Kunstlicht: $x \cong$ einige Meter

$\delta$ ist eine für das jeweilige Kunstlicht K gültige Konstante, die das Verhältnis der spektralen Leistungsdichten $I_{K1}$, $I_{K2}$ bei den Wellenlängen $\lambda_1$ und $\lambda_2$

$$\delta = \frac{I_{K1}}{I_{K2}} \qquad (3)$$

wiedergibt.

Bei der spektralen Auswertung auf zwei Wellenlängen $\lambda_1$, $\lambda_2$ ergibt sich somit ein Gesamtsignal als Summe der spektralen Leistungsdichte aus Kunstlicht K und Sonnenlicht S.

$$I_1 = I_{K1} + I_{S1}$$

$$I_2 = I_{K2} + I_{S2} = I_{K2} + \gamma^{-1} \cdot I_{S1}$$

woraus sich die spektrale Leistungsdichte des Kunstlichts ableiten lässt

$$I_1 - \gamma \cdot I_2 = I_{K1} - (\gamma \cdot I_{K1})/\delta$$

$$= I_{K1} (1 - \gamma/\delta)$$

Somit lässt sich die spektrale Leistungsdichte $I_K$ des Kunstlichts K bei einer Wellenlänge $\lambda_1$ berechnen zu

$$I_{K1} = \frac{I_1 - \gamma \cdot I_2}{1 - \gamma/\delta} = \frac{\delta(I_1 - \gamma \cdot I_2)}{\delta - \gamma} \qquad (4)$$

Analog lässt sich die spektrale Leistungsdichte $I_{K2}$ des Kunstlichts K bei einer Wellenlänge $\lambda_2$ berechnen.

Sowohl aus der spektralen Leistungsdichte $I_{K1}$ als auch $I_{K2}$ ergibt sich der Kunstlichtanteil $I_K$ an der spektralen Leistungsdichte.

Durch Ableitung einer (4) entsprechenden Formel kann auch die spektrale Leistungsdichte $I_{S1}$ des Sonnenlichtes S berechnet werden.

$$I_{S1} = \frac{\gamma(I_1 - \delta \cdot I_2)}{\gamma - \delta} \qquad (5)$$

Analog lässt sich die spektrale Leistungsdichte $I_{S2}$ des Sonnenlichtes S bei einer Wellenlänge $\lambda_2$ berechnen.

Nach einer ersten Variante wird mit einem ersten Sensor und einem ersten Schmalbandfilter die spektrale Leistungsdichte $I_1$ im Bereich des Scheitels einer charakteristischen Absorptionsbande der Wellenlänge $\lambda_1$, mit demselben oder einem zweiten Sensor und einem zweiten Schmalbandfilter die spektrale Leistungsdichte $I_2$ unmittelbar benachbart der Absorptionsbande direkt oder photometrisch gemessen und der Sonnenlicht-$I_{S1}$ und/oder der Kunstlichtanteil $I_{K1}$ berechnet

Nach einer zweiten erfindungsgemässen Variante wird zusätzlich zur zweiten Variante mit einem dritten Sensor und einem dritten Schmalbandfilter die spektrale Leistungsdichte $I_3$ unmittelbar benachbart der Absorptionsbande, jedoch auf der anderen Seite, gemessen und der Sonnen- $I_{S1}$ und/oder Kunstlichtanteil $I_{K1}$ berechnet.

Nach einer dritten erfindungsgemässen Variante wird mit einem ersten Sensor und einem Schmalbandfilter die spektrale Leistungsdichte $I_1$ im Bereich des Scheitels einer charakteristischen Absorptionsbande der Wellenlänge $\lambda_1$, mit einem zweiten Sensor und einem den Schmalbandfilter umschliessenden Breitbandfilte die spektrale leistungsdichte $I_2$ unmittelbar benachbart der Absorptionsbande gemessen und der Sonnenlicht- $I_{S1}$ und/oder Kunstlichtanteil $I_{K1}$ berechnet. Zweckmässig wird nach diesem Verfahren ein Breitbandfilter mit einer Symmetrieachse von gleicher Wellenlänge $\lambda_1$ wie beim Schmalbandfilter eingesetzt. Selbstverständlich ist dies jedoch nicht erforderlich.

Nach allen Varianten werden vorzugsweise Sensoren mit einem integrierten Schmalband- oder Breitbandfilter verwendet Die Filterkurven von Schmalbandfiltem aller Typen haben bevorzugt eine Breite von nur wenigen Nanometern, insbesondere 5 bis 25 nm.

Neben mathematischen Verfahren kann durch entsprechende Software-Routinen, beispielsweise durch iterative Schleifenberechnung, ausgehend von einem angenommenen Startwert des Sonnenlichtes, und anschliessender schrittweiser Verringerung oder Vergrösserung mit dem Abbruchkriterium, dass der aktuelle Wert die geringste Abweichung zum theoretischen Wert für Sonnenlicht ergibt. Es werden vorzugsweise zwei, drei oder mehr Absorptionsbanden oder eine Absorptionsbande und wenigstens eine Filterkurve einbezogen.

Obwohl im Prinzip alle in der Erdatmosphäre vorhandenen Gase für die Messungen eingesetzt werden können, beispielsweise Stickstoff, Sauerstoff, Kohlendioxid, Wasser, Argon, usw., haben nicht alle Gase in gleichem Masse geeignete charakteristische Absorptionsbanden. In der Praxis hat es sich erwiesen, dass die Absorptionsbanden von Sauerstoff besonders günstig sind, insbesondere im Bereich von 720, 740 und 760 nm. Die Intensitäten bei diesen Banden, insbesondere bei der letztgenannten mit einem Scheitel bei 762,1 nm, sind überdies weitgehend konstant, über die Tages- und Jahreszeiten ergeben sich nur geringfügige Variationen.

Die von einem oder mehreren Sensoren z.B. mit Photodioden gemessenen Signale werden in der Praxis meist von einem Mikrocontroller in an sich bekannter Weise gespeichert und ausgewertet. Auch die charakteristischen Absorptionsbanden der in der Atmosphäre vorhandenen Gasmoleküle sind an sich bekannt und können im Mikrocontroller abgespeichert werden.

Das erfindungsgemässe Verfahren wird insbesondere zur Steuerung und/oder Regelung von Beleuchtungsanlagen im Hoch- und Tiefbau oder von Motorfahrzeugen bei wechselndem Sonnenlicht S angewendet, wobei eine einstellbare spektrale Leistungsdichte $I_\lambda$ von Sonnenlicht S und Kunstlicht K nicht unterschritten wird. Weiterbildende und vorteilhafte Anwendungen ergeben sich aus den abhängigen Ansprüchen.

Die spektrale Leistungsdichte $I_\lambda$ besteht im einen Extremfall, bei hinreichendem Tageslicht, ausschliesslich aus Sonnenlicht, mit andern Worten sind alle Beleuchtungskörper ausgeschaltet. Im andern Extremfall, bei Nacht, wird die volle spektrale Leistungsdichte $I_\lambda$ durch Beleuchtungskörper erbracht.

In allen andern Fällen wird die spektrale Leistungsdichte $I_\lambda$ durch Mischlicht aus Sonnen- und Kunstlicht erbracht. Mit andern Worten ergänzt Kunstlicht K von Beleuchtungskörpern fehlendes Sonnenlicht S.

Im speziellen Anwendungsfall eines Motorfahrzeugs wird mindestens die Scheinwerferanlage erfindungsgemäss gesteuert. Die übrigen, auch rückwärts gerichteten Beleuchtungskörper können ebenfalls erfindungsgemäss gesteuert oder auf einer konstanten Leuchtstärke gehalten werden.

Ein weiterer bedeutender Anwendungsfall des erfindungsgemässen Verfahrens ist die Beleuchtung eines Arbeits- oder Aufenthaltsplatzes, welcher stark wechselndem Sonnenlicht ausgesetzt ist.

Eine wesentliche Weiterausbildung der Anwendung des erfindungsgemässen Verfahrens besteht darin, dass die Steuerung und/oder Regelung einer Beleuchtungsanlage unter Einwirkung eines Präsenz- und/oder Aktivitätsmelders erfolgt. Dadurch können die Energieeinsparungen nach einem weiteren Kriterium erheblich erhöht werden. Es wird nicht nur der Anteil von Kunstlicht so tief wie möglich gehalten, die Einschaltung wird auch zeitlich begrenzt. Wenn ein Raum unbenutzt ist oder darin keine menschliche Aktivität feststellbar ist, wird das Kunstlicht automatisch ausgeschaltet. Es sind zahlreiche Ausführungsformen von Präsenz- und Aktivitätsmeldern bekannt, beispielsweise aus der EP,A1 0900417.

Die Erfindung wird anhand von in der Zeichnung dargestellten Grafiken und anderen Ausführungsbeispielen, welche auch Gegenstand von abhängigen Patentansprüchen sind, näher erläutert. Es zeigen schematisch

- Fig. 1 einen Ausschnitt aus dem Spektrum von Sonnenlicht mit zwei Absorptionsbanden von Sauerstoffmolekülen,
- Fig. 2 die spektralen Leistungsdichten $I_1$ und $I_2$ aus Sonnen- und Kunstlicht im Bereich der Absorptionsbande der Sauerstoffmoleküle bei der Lichtwellenlänge $\lambda = 762,1$ nm,
- Fig. 3 den Bereich gemäss Fig. 2 mit den Filterkurven von zwei Schmalbandfiltern,

- Fig. 4 die spektralen Leistungsdichten $I_1$, $I_2$ und $I_3$ im Bereich gemäss Fig. 2,
- Fig. 5 einen Ausschnitt gemäss Fig. 3 mit drei Schmalbandfiltern,
- Fig. 6 einen Ausschnitt gemäss Fig. 2 mit einem Schmalband- und einem Breitbandfilter,
- Fig. 7 einen Ausschnitt gemäss Fig. 3 mit einem Schmalband- und einem symmetrisch angeordneten Breitbandfilter, und
- Fig, 8 eine asymmetrische Variante gemäss Fig. 7.

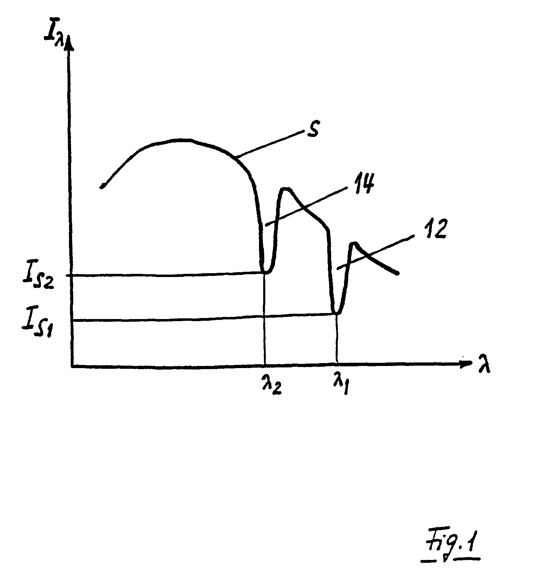

In Fig. 1 ist spektrale Leistungsdichte $I_\lambda$ in Abhängigkeit der Wellenlänge $\lambda$ des Sonnenlichtes S aufgetragen. Im Bereich der Wellenlänge $\lambda_1$ besteht eine Absorptionsbande 12, die Sauerstoffmoleküle der Erdatmosphäre absorbieren in diesem Bereich 12 das Sonnenlicht S weitgehend. Im Bereich einer kleineren Wellenlänge $\lambda_2$ findet sich eine weitere Absorptionsbande 14, welche in diesem Bereich ebenfalls Sonnenlicht S teilabsorbiert.

Bei den Wellenlängen $\lambda_1$ und $\lambda_2$ hat das Sonnenlicht S nur noch eine spektrale Leistungsdichte $I_{S1}$ und $I_{S2}$. Die spektralen Leistungsdichten $I_1$ und $I_2$ sind abhängig von der Weglänge x des Sonnenlichtes S durch die Erdatmosphäre mit Sauerstoffmolekülen. Je grösser diese Weglänge x ist, desto mehr sinken die Werte $I_{S1}$ und $I_{S2}$ auf der Ordinate ab. Beim nicht dargestellten Kunstlicht K, das in einem Raum eine Weglänge x von wenigen Metern, bei einem Motorfahrzeug von einigen Dutzend Metern hat, fällt der Absorptionseffekt nicht ins Gewicht. Deshalb können bei der Spektralanalyse einer spektralen Leistungsdichte $I_\lambda$ Sonnenlicht S und an Sonnenlicht angenähertes Kunstlicht K problemlos unterschieden werden.

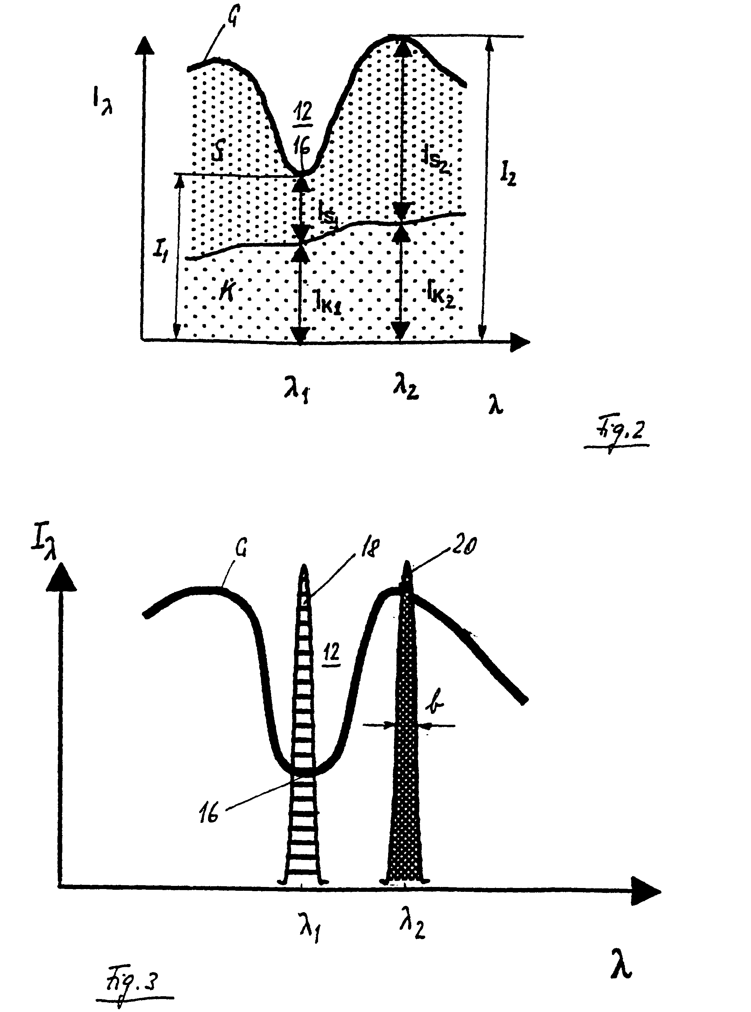

Fig. 2 zeigt eine deutliche Absorptionsbande 12 der Sauerstoffmoleküle bei der Lichtwellenlänge $\lambda_1$ = 762,1 nm, welche für Lichtmessungen am besten geeignet ist. Die am häufigsten verwendeten künstlichen Lichtquellen (z.B. Leuchtstofflampen, Halogenlampen und Glühbirnen) haben in diesem Wellenlängenbereich kein dem Sonnenlicht S ähnliches relatives Spektrum. Die Bestimmung der spektralen Leistungsdichte des Sonnenlichtes erfolgt aus zwei schmalbandigen Messungen der spektralen Leistungsdichten $I_1$, $I_2$ des Gesamtlichtes. Die spektrale Leistungsdichte $I_1$ wird beim Scheitel 16 der erwähnten Absorptionsbande 12 des Sauerstoffs und die andere spektrale Leistungsdichte $I_2$ benachbart dieses Bandes, beispielsweise 15 nm neben dem Scheitel 16, gemessen. Mit Berücksichtigung der vorstehenden Gleichungen (2) für die Konstante $\gamma$, dem Quotienten der Sonnenlichtanteile $I_{S1}$ und $I_{S2}$, sowie der Gleichung (3) für die Konstante $\delta$, dem Quotienten der Kunstlichtanteile $I_{K1}$ und $I_{K2}$, können die Sonnenlicht- $I_{S1}$, $I_{S2}$ und Kunstlichtanteile $I_{K1}$, $I_{K2}$ berechnet werden. Dazu werden die vorstehenden Formeln (4) und (5) benutzt.

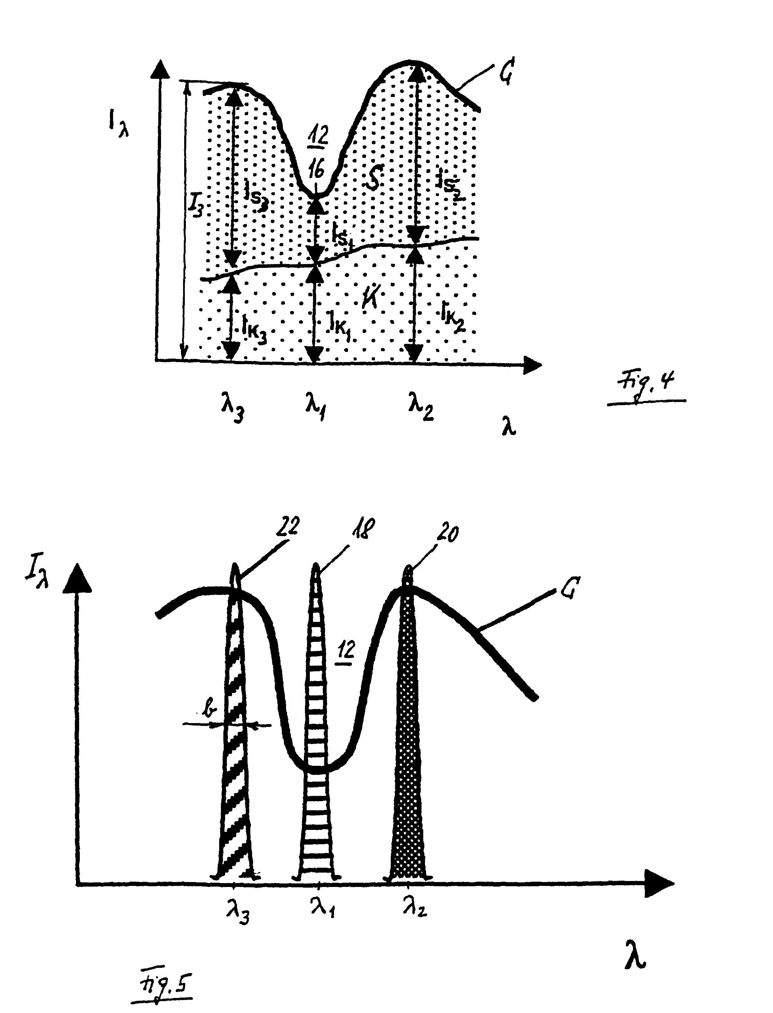

Fig. 3 zeigt wiederum die spektrale Leistungsdichte $I_\lambda$ des Gesamtlichts G als Summe des Sonnenlichts S und des Kunstlichts K (Fig. 1), messbar als spektrale Leistungsdichten $I_1$ und $I_2$ im Bereich der Lichtwellenlängen $\lambda_1$ und $\lambda_2$. Die spektrale Leistungsdichte $I_\lambda$ des Gesamtlichtes G verläuft analog Fig. 1. Über den Scheitel 16 der Absorptionsbande 12 verläuft die Filterkurve eines ersten Schmalbandfilters 18. Eine weitere Filterkurve eines zweiten Schmalbandfilters 20 verläuft unmittelbar benachbart des ersten Schmalbandfilters, der Unterschied in der Lichtwellenlängen $\lambda_1$ und $\lambda_2$ beträgt etwa 15 bis 25 nm. Beide Schmalbandfilter haben auf halber Höhe eine Breite b von etwa 4 mm.

Auch gemäss Fig. 1 sind zwei Schmalbandfilter 18, 20 angeordnet, jedoch nicht dargestellt. Im Fall von Fig. 1 werden jedoch die Scheitel 16 von zwei Absorptionsbanden 12, 14 gemessen und daraus der Anteil des Sonnenlichtes bzw. des Kunstlichtes gemessen und berechnet.

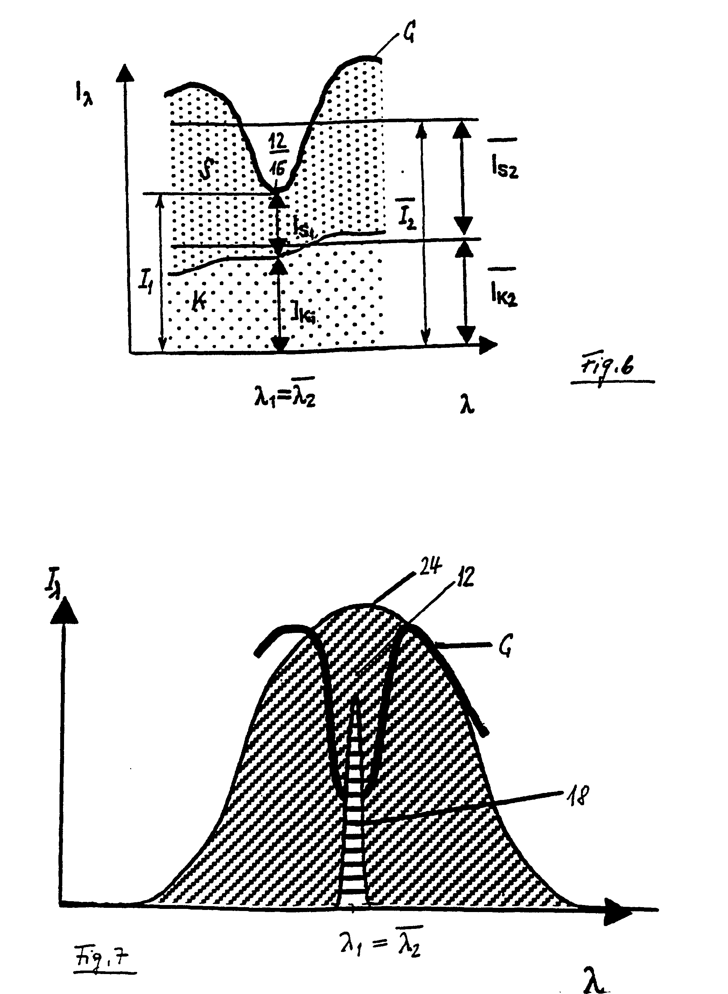

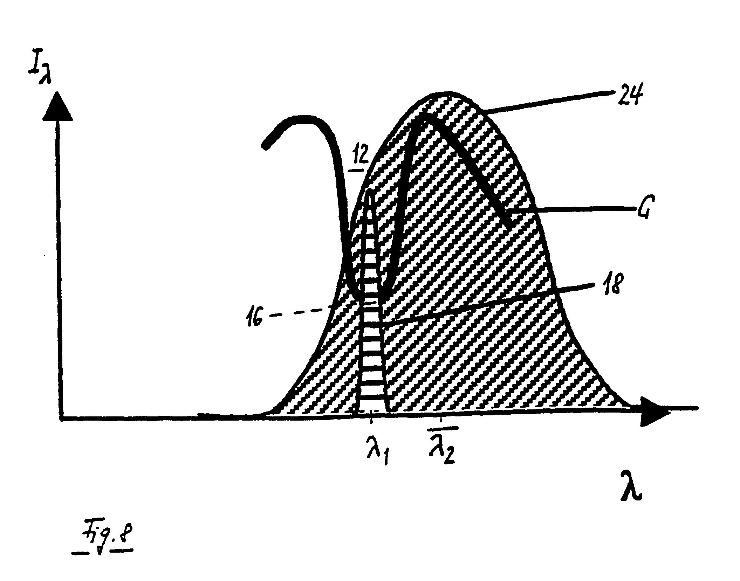

Fig. 4 und 5 entsprechen im wesentlichen Fig. 2 und 3, es wird jedoch noch eine weitere spektrale Leistungsdichte $I_3$ benachbart der Absorptionsbande 12 gemessen. Aus drei schmalbandigen Messungen der spektralen Leistungsdichten $I_1$, $I_2$, $I_3$ des Gesamtlichtes G kann die spektrale Leistungsdichte $I_{S1}$ des Sonnenlichtes bestimmt werden. Die spektrale Leistungsdichte $I_2$ wird bei der oben erwähnten Sauerstoffabsorptionsbande der Wellenlänge $\lambda_1$ gemessen. Die beiden andern spektralen Leistungsdichten $I_2$ und $I_3$ werden im vorliegenden Fall mit einem nach oben und unten abweichenden $\lambda_2$ und $\lambda_3$ von etwa 15 nm gemessen.

Bei dieser Variante gibt es im Unterschied zur vorhergehenden Lösungsvariante zwei Verhältnisse von spektralen Leistungsdichten des Sonnenlichtes zueinander, nämlich

$$\gamma_{21} = \frac{I_{S2}}{I_{S1}} = \text{const.}$$

und

$$\gamma_{31} = \frac{I_{S3}}{I_{S1}} = \text{const.}$$

Bezüglich des Kunstlichtes wird angenommen, dass die spektralen Leistungsdichten $I_{K1}$, $I_{K2}$ und $I_{K3}$ auf einer charakteristischen Geraden liegen.

Unter dieser Voraussetzung erhält man für die berechnete spektrale Leistungsdichte $I_{S1}$ des Sonnenlichtes S folgende Formel

$$I_{S1} = \frac{I_1 \cdot |\Delta \lambda_{23}| - I_2 \cdot |\Delta \lambda_{13}| - I_3 |\Delta \lambda_{21}|}{|\Delta \lambda_{23}| - \gamma_{21} \cdot |\Delta \lambda_{13}| - \gamma_{31} \cdot |\Delta \lambda_{21}|} \quad (6)$$

Die Ausführungsform gemäss Fig. 6 zeigt das Grundprinzip der mittleren spektralen Leistungsdichte $I_{S1}$ des Sonnenlichtes aus einer schmalbandigen und einer breitbandigen Messung der spektralen Leistungsdichte $I_1$, $I_2$ des Gesamtlichtes G. Die schmalbandige Messung der spektralen Leistungsdichte $I_1$ wird bei der Sauerstoffabsorptionsbande 12 vorgenommen, wo die Lichtwellenlänge $\lambda_1$ = 362,1 nm beträgt. Die breitbandige Messung erfolgt über einen Wellenlängenbereich, welcher wesentlich grösser als bei der schmalbandigen Messung. Dabei ergibt sich eine mittlere spektrale Leistungsdichte $\overline{I_2}$.

Die mittlere Wellenlänge $\overline{\lambda_2}$ des erwähnten Wellenlängenbereichs der breitbandigen Messung wird gemäss Fig. 7 gleich der Wellenlänge $\lambda_1$ der schmalbandigen Messung gewählt. Die Filterkurve des Breitbandfilters 24 ist in Fig. 7 dargestellt. Die Berechnungsformeln sind analog zu denjenigen gemäss Fig. 2 und 3, wobei die schmalbandigen spektralen Leistungsdichten durch die entsprechenden Mittelwerte $\overline{I_{S1}}$, $\overline{I_{K1}}$ und $\overline{I_1}$ ersetzt werden müssen.

Fig. 8 zeigt wiederum einen Bereich des Sonnenlichtspektrums mit der Absorptionsbande 12 der Sauerstoffmoleküles bei der Lichtwellenlänge $\lambda_1$ = 762,1 nm. Über den verdeckten Scheitel der Absorptionsbande 12 ist eine Filterkurve eines Schmalbandfilters 18 gelegt, welches in einen ersten Sensor integriert ist. Ein zweiter Sensor weist ein Breitbandfilter 24 mit einer entsprechenden Filterkurve auf, wobei die durchschnittliche Lichtwellenlänge $\overline{\lambda_2}$ um etwa 20 nm verschoben ist. Die Filterkurve des Breitbandfilters 24 überdeckt die Filterkurve des Schmalbandfilters 18 vollständig. Wie bei den vorhergehenden Figuren ist ein integrierter der $V_\lambda$-Empfänger üblicher Bauart nicht dargestellt.

## Patentansprüche

1. Verfahren zur Bestimmung des Sonnen- ($I_S$) und/ oder Kunstlichtanteils ($I_K$) der spektralen Leistungsdichte ($I_\lambda$) in einem durch Sonnenlicht (S) und Kunstlicht (K) beleuchteten Raumvolumen mittels wenigstens eines in diesem Bereich angeordneten Sensors und/oder Filters, wobei die erzeugten Signale von einer Recheneinheit gespeichert und ausgewertet werden, **dadurch gekennzeichnet, dass**, die von der Wellenlänge ($\lambda$) abhängige Absorption des die ganze Erdatmosphäre durchlaufenden Sonnenlichtes (S) durch Gasmoleküle bei charakteristischen Absorptionsbanden (12,14) mit für die spektralen Leistungsdichten ($I_\lambda$) Signale erzeugenden Sensoren gemessen und aus dem Vergleich der spektralen Leistungsdichten ($I_\lambda$) die Anteile des Sonnenlichtes (S) und des Kunstlichtes (K) bestimmt werden, indem ein Sensor zwei charakteristische Absorptionsbanden (12,14) der spektralen Leistungsdichten ($I_1$, $I_2$) misst, dann mittels einer Konstanten ($\gamma$), dem Quotienten der spektralen Leistungsdichten ($I_{S1}$,$I_{S2}$) des Sonnenlichtes (S) bei $\lambda_1$

und $\lambda_2$, und einer Konstanten ($\delta$), dem Quotienten der entsprechenden spektralen Leistungsdichten ($I_{K1}$, $I_{K2}$) des Kunstlichtes (K), eine spektrale Leistungsdichte ($I_{S1}$, $I_{S2}$) des Sonnenlichtes (S) und/ oder eine spektrale Leistungsdichte ($I_{K1}$, $I_{K2}$) des Kunstlichtes (K) berechnet wird.

2. Verfahren nach Anspruch 1, **dadurch gekennzeichnet, dass** die spektrale Leistungsdichte ($I_{K1}$) des Kunstlichtes (K) nach der Formel

$$I_{K1} = \frac{I_1 - \gamma \cdot I_2}{1 - \gamma/\delta} = \frac{\delta(I_1 - \gamma \cdot I_2)}{\delta - \gamma} \qquad (4)$$

und/oder die spektrale Leistungsdichte ($I_{S1}$) des Sonnenlichtes (S) nach der Formel

$$I_{S1} = \frac{\gamma(I_1 - \delta \cdot I_2)}{\gamma - \delta} \qquad (5)$$

berechnet wird, wobei

$I_1$ = spektrale Leistungsdichte bei einer Wellenlänge $\lambda_1$

$I_2$ = spektrale Leistungsdichte bei einer Wellenlänge $\lambda_2$

$I_{K1}$ = spektrale Leistungsdichte des Kunstlichtes K bei $\lambda_1$

$I_{S1}$ = spektrale Leistungsdichte des Sonnenlichtes S bei $\lambda_1$

$\gamma,\delta$ = const.

bedeutet.

3. Verfahren nach Anspruch 1 oder 2, **dadurch gekennzeichnet, dass** mit einem ersten Sensor und einem ersten Schmalbandfilter (18) die spektrale Leistungsdichte ($I_1$) im Bereich des Scheitels (16) einer charakteristischen Absorptionsbande (12) der Wellenlänge ($\lambda_1$), mit einem zweiten Sensor und einem zweiten Schmalbandfilter (20) die spektrale Leistungsdichte ($I_2$) unmittelbar benachbart der Absorptionsbande direkt oder photometrisch gemessen und der Sonnenlicht- ($I_{S1}$) und/oder der Kunstlichtanteil ($I_{K1}$) berechnet wird.

4. Verfahren nach Anspruch 3, **dadurch gekennzeichnet, dass** zusätzlich mit einem dritten Sensor und einem dritten Schmalbandfilter (22) die spektrale Leistungsdichte ($I_3$) unmittelbar benachbart der anderen Seite der Absorptionsbande (12) gemessen und der Sonnen- ($I_{S1}$) und/oder Kunstlichtanteil ($I_{K1}$) berechnet wird.

5. Verfahren nach Anspruch 3 oder 4, **dadurch gekennzeichnet, dass** mit demselben Sensor die Fil-

terkurven von mehreren Schmalbandfiltern (18,20,22) gemessen werden.

6. Verfahren nach Anspruch 1, **dadurch gekennzeichnet, dass** mit einem ersten Sensor und einem Schmalbandfilter (18) die spektrale Leistungsdichte ($I_1$) im Bereich des Scheitels (16) einer charakteristischen Absorptionsbande (12) der Wellenlänge ($\lambda_1$), mit einem zweiten Sensor und einem den Schmalbandfilter (18) umschliessenden Breitbandfilter (24) die spektrale Leistungsdichte ($I_2$) unmittelbar benachbart der Absorptionsbande (12) gemessen und der Sonnenlicht- ($I_{S1}$) und/oder Kunstlichtanteil ($I_{K1}$) berechnet wird.

7. Verfahren nach Anspruch 6, **dadurch gekennzeichnet, dass** ein Breitbandfilter (24) mit einer Symmetrieachse von gleicher Wellenlänge ($\lambda_1$) wie beim Schmalbandfilter (18) eingesetzt wird.

8. Verfahren nach einem der Ansprüche 3 bis 7, **dadurch gekennzeichnet, dass** Schmalbandfilter (18,20,22) bei verschiedenen Wellenlängen ($\lambda_1$, $\lambda_2$, $\lambda_3$) mit einer Filterkurve einer auf halber Höhe gemessenen Breite (b) von wenigen Nanometern, vorzugsweise 5 bis 25 nm, eingesetzt werden.

9. Verfahren nach Anspruch 3, 6 oder 7, **dadurch gekennzeichnet, dass** der Anteil der spektralen Leistungsdichte ($I_{S1}$) des Sonnenlichtes (S) bei der Wellenlänge $\lambda_1$ nach der Formel

$$I_{S1} = \frac{\gamma(I_1 - \delta \cdot I_2)}{\gamma - \delta} \qquad (5)$$

und/oder der Anteil der spektralen Leistungsdichte ($I_{K1}$) des Kunstlichtes (K) nach der Formel

$$I_{K1} = \frac{I_1 - \gamma \cdot I_2}{1 - \gamma/\delta} = \frac{\delta(I_1 - \gamma \cdot I_2)}{\delta - \gamma} \qquad (4)$$

berechnet wird, wobei

| | |
|---|---|
| $I_{1,2}$ = | spektrale Leistungsdichte bei einer Wellenlänge $\lambda_1, \lambda_2$ |
| $I_{S1}, I_{S2}$ = | spektrale Leistungsdichte des Sonnenlichtes S bei $\lambda_1, \lambda_2$ |
| $I_{K1}, I_{K2}$ = | spektrale Leistungsdichte des Kunstlichtes K bei $\lambda_1, \lambda_2$ |
| $\gamma$ = | $I_{S1}/I_{S2}$ = const |
| $\delta$ = | $I_{K1} / I_{K2}$ = const. |

10. Verfahren nach Anspruch 4, **dadurch gekennzeichnet, dass** der Anteil der spektralen Leistungsdichte ($I_{S1}$) des Sonnenlichtes (S) bei der Wellenlänge ($\lambda_1$) nach der Formel

$$I_{S1} = \frac{I_1 \cdot |\Delta\,\lambda_{23}| - I_2 \cdot |\Delta\,\lambda_{13}| - I_3\,|\Delta\,\lambda_{21}|}{|\Delta\,\lambda_{23}| - \gamma_{21} \cdot |\Delta\,\lambda_{13}| - \gamma_{31} \cdot |\Delta\,\lambda_{21}|} \qquad (6)$$

berechnet wird, wobei

| | |
|---|---|
| $I_3$ = | spektrale Leistungsdichte bei einer Wellenlänge $\lambda_3$, |
| $\Delta\lambda$ = | Differenz der Wellenlängen $\lambda$ zwischen Schmalbandfiltern (18, 20, 22) |
| $\gamma_{21}$ = | $I_{S2} / I_{S1}$ = const.; $\gamma_{31} = I_{S3} / I_{S1}$ = const. |

11. Verfahren nach einem der Ansprüche 1 und 3 bis 7, **dadurch gekennzeichnet, dass** ausgehend von einem Startwert der spektralen Leistungsdichte ($I_S$) des Sonnenlichtes (S) durch entsprechende Algorithmen, vorzugsweise durch iterative Schleifenberechnung, und anschliessender schrittweiser Verkleinerung oder Vergrösserung mit einem Abbruchkriterium erreicht wird, dass der aktuelle Wert die geringste Abweichung zum theoretischen Wert für Sonnenlicht (S) ergibt.

12. Verfahren nach einem der Ansprüche 1 bis 7, **dadurch gekennzeichnet, dass** wenigstens eine Absorptionsbande (12,14) von Sauerstoff benutzt wird, vorzugsweise im Bereich von etwa $\lambda = 720$, 740 oder 760 nm, insbesondere die Absorptionsbande mit einem Scheitel (16) von 762,1 nm.

13. Verfahren nach einem der Ansprüche 1 bis 12, **dadurch gekennzeichnet, dass** die Daten mit einem Mikrocontroller gespeichert und ausgewertet werden.

14. Verfahren nach einem der Ansprüche 1 bis 13, **dadurch gekennzeichnet, dass** die Variation der Tageslichtdauer über das Jahr hinweg ermittelt und die jahreszeitlichen Schwankungen der Absorptionscharakteristik kompensiert werden.

15. Anwendung des Verfahrens nach einem der Ansprüche 1 bis 14 zur Steuerung und/oder Regelung von Beleuchtungsanlagen in einem Raum oder von Motorfahrzeugen, beides bei wechselndem Sonnenlicht (S), wobei eine einstellbare spektrale Leistungsdichte ($I_\lambda$) bzw. Gesamtbeleuchtungsstärke von Sonnenlicht (S) und Kunstlicht (K) nicht unterschritten wird.

16. Anwendung nach Anspruch 15, **dadurch gekennzeichnet, dass** die spektrale Leistungsdichte ($I_\lambda$) bzw. Gesamtbeleuchtungsstärke eines Arbeits- oder Aufenthaltsplatzes bei wechselndem Sonnenlicht (S) durch zugeschaltetes Kunstlicht (K) konstant gehalten wird.

17. Anwendung nach Anspruch 15 oder 16, **dadurch**

**gekennzeichnet, dass** die Steuerung der Beleuchtungsanlage kombiniert mit wenigstens einem Präsenz- und/oder Absenzmelder erfolgt.

## Claims

1. Method for determining the proportion of sunlight ($I_s$) and/or artificial light ($I_k$) of the spectral power density ($I_\lambda$) in a spatial volume illuminated by sunlight (S) and artificial light (K) by means of at least one sensor and/or filter arranged in this region, the generated signals being stored and evaluated by an arithmetic unit, **characterised in that** the absorption, which is dependent on the wavelength ($\lambda$), by means of gas molecules in characteristic absorption bands (12, 14) of the sunlight (S) traversing the entire earth's atmosphere is measured by sensors generating signals for the spectral power densities ($I_\lambda$) and the proportions of the sunlight (S) and the artificial light (K) are determined from the comparison of the spectral power densities ($I_\lambda$), **in that** a sensor measures two characteristic absorption bands (12, 14) of the spectral power densities ($I_1$, $I_2$), then a spectral power density ($I_{s1}$, $I_{s2}$) of the sunlight (S) and/or a spectral power density ($I_{k1}$, $I_{k2}$) of the artificial light (K) is calculated by means of a constant ($\gamma$), the quotient of the spectral power densities ($I_{s1}$, $I_{s2}$) of the sunlight (S) at ($\lambda_1$) and ($\lambda_2$), and by means of a constant ($\delta$), the quotient of the corresponding spectral power densities ($I_{k1}$, $I_{k2}$) of the artificial light (K).

2. Method according to claim 1, **characterised in that** the spectral power density ($I_{k1}$) of the artificial light (K) is calculated according to the formula

$$I_{K1} = \frac{I_1 - \gamma \cdot I_2}{1 - \gamma/\delta} = \frac{\delta(I_1 - \gamma \cdot I_2)}{\delta - \gamma} \qquad (4)$$

and/or the spectral power density ($I_{s1}$) of the sunlight (S) is calculated according to the formula

$$I_{S1} = \frac{\gamma(I_1 - \delta \cdot I_2)}{\gamma - \delta} \qquad (5)$$

wherein

| | |
|---|---|
| $I_1$ = | spectral power density at a wavelength $\lambda_1$ |
| $I_2$ = | spectral power density at a wavelength $\lambda_2$ |
| $I_{k1}$ = | spectral power density of the artificial light K at $\lambda_1$ |
| $I_{s1}$ = | spectral power density of the sunlight S at $\lambda_1$ |
| $\gamma, \delta$ = | const. |

3. Method according to claim 1 or 2, **characterised in that** the spectral power density ($I_1$) in the region of the peak (16) of a characteristic absorption band (12) of the wavelength ($\lambda_1$) is directly or photometrically measured by a first sensor and a first narrow band filter (18), and the spectral power density ($I_2$), directly adjacent to the absorption band, by a second sensor and a second narrow band filter (20), and the proportion of sunlight ($I_{s1}$) and/or artificial light ($I_{k1}$) is calculated.

4. Method according to claim 3, **characterised in that** the spectral power density ($I_3$), directly adjacent to the other side of the absorption band (12) is also measured by a third sensor and a third narrow band filter (22), and the proportion of sunlight ($I_{s1}$) and/or artificial light ($I_{k1}$) is calculated.

5. Method according to claim 3 or 4, **characterised in that** the filter curves of a plurality of narrow band filters (18, 20, 22) are measured by the same sensor.

6. Method according to claim 1, **characterised in that** the spectral power density ($I_1$) in the region of the peak (16) of a characteristic absorption band (12) of the wavelength ($\lambda_1$) is measured by a first sensor and a narrow band filter (18), and a measurement is made by a second sensor and a wide band filter (24) enclosing the narrow band filter (18) and the proportion of sunlight ($I_{s1}$) and/or artificial light ($I_{k1}$) is calculated.

7. Method according to claim 6, **characterised in that** a wide band filter (24) with an axis of symmetry of the same wavelength ($\lambda_1$) as in the narrow band filter (18) is used.

8. Method according to any one of claims 3 to 7, **characterised in that** narrow band filters (18, 20, 22) are used at various wavelengths ($\lambda_1$, $\lambda_2$, $\lambda_3$) with a filter curve of a width (b) measured halfway up of a few nanometres, preferably 5 to 25 nm.

9. Method according to claim 3, 6 or 7, **characterised in that** the proportion of spectral power density ($I_{s1}$) of the sunlight (S) at the wavelength ($\lambda_1$) is calculated according to the formula

$$I_{S1} = \frac{\gamma(I_1 - \delta \cdot I_2)}{\gamma - \delta} \qquad (5)$$

and/or the proportion of spectral power density ($I_{k1}$) of the artificial light (K) is calculated according to the formula

$$I_{K1} = \frac{I_1 - \gamma \cdot I_2}{1 - \gamma/\delta} = \frac{\delta(I_1 - \gamma \cdot I_2)}{\delta - \gamma} \qquad (4)$$

wherein

$I_{1,2}$ = spectral power density at a wavelength $\lambda_1$, $\lambda_2$

$I_{s1}$, $I_{s2}$ = spectral power density of the sunlight S at $\lambda_1$, $\lambda_2$

$I_{k1}$, $I_{k2}$ = spectral power density of the artificial light K at $\lambda_1$, $\lambda_2$

$\gamma$ = $I_{s1}/I_{s2}$ = const.

$\delta$ = $I_{k1}/I_{k2}$ = const.

10. Method according to claim 4, **characterised in that** the proportion of the spectral power density ($I_{s1}$) of the sunlight (S) at the wavelength ($\lambda_1$) is calculated according to the formula

$$I_{S1} = \frac{I_1 \cdot |\Delta\lambda_{23}| - I_2 \cdot |\Delta\lambda_{13}| - I_3 \; |\Delta\lambda_{21}|}{|\Delta\lambda_{23}| - \gamma_{21} \cdot |\Delta\lambda_{13}| - \gamma_{31} \cdot |\Delta\lambda_{21}|} \qquad (6)$$

wherein

$I_3$ = spectral power density at a wavelength $\lambda_3$,

$\Delta\lambda$ = difference in the wavelengths $\lambda$ between narrow band filters (18, 20,22)

$\gamma_{21}$ = $I_{s2}/I_{s1}$ = const.; $\gamma_{31} = I_{s3}/I_{s1}$ = const.

11. Method according to any one of claims 1 and 3 to 7, **characterised in that** starting from a starting value of the spectral power density ($I_s$) of the sunlight (S) it is achieved by appropriate algorithms, preferably by iterative loop calculation and subsequent stepwise reduction or increase with an abort criterion, that the current value produces the smallest variation from the theoretical value for sunlight (S).

12. Method according to any one of claims 1 to 7, **characterised in that** at least one absorption band (12, 14) of oxygen is used, preferably in the range of about $\lambda$ = 720, 740 or 760 nm, in particular the absorption band with a peak (16) of 762.1 nm.

13. Method according to any one of claims 1 to 12, **characterised in that** the data are stored and evaluated by a microcontroller.

14. Method according to any one of claims 1 to 13, **characterised in that** the variation in daylight duration is determined over the year and the seasonal variations of the absorption characteristic are compensated.

15. Use of the method according to any one of claims 1 to 14, for controlling and/or regulating lighting installations in a space or of motor vehicles, both in changing sunlight (S), wherein an adjustable spectral power density ($I_\lambda$) or total illuminance of sunlight (S) and artificial light (K) is not fallen below.

16. Use according to claim 15, **characterised in that** the spectral power density ($I_\lambda$) or total lighting intensity of a work or recreation space is kept constant in changing sunlight (S) by connected artificial light (K).

17. Use according to claim 15 or 16, **characterised in that** the lighting installation is controlled, combined with at least one presence and/or absence detector.

**Revendications**

1. Procédé pour la détermination de la proportion en lumière du soleil ($I_s$) et/ou en lumière artificielle ($I_k$) de la puissance volumique spectrale ($I_\lambda$) dans un volume spatial éclairé par la lumière du soleil (S) et par la lumière artificielle (K) au moyen d'au moins un capteur et/ou filtre disposé dans ce domaine, les signaux produits étant mémorisés et évalués par une unité de calcul,

   **caractérisé en ce qu'**on mesure l'absorption en fonction de la longueur d'onde ($\lambda$) de la lumière du soleil (S) qui traverse la totalité de l'atmosphère terrestre par des molécules de gaz pour des bandes d'absorption caractéristiques (12, 14) au moyen de capteurs qui produisent des signaux pour les puissances volumiques spectrales ($I_\lambda$) et on détermine, à partir de la comparaison des puissances volumiques spectrales ($I_\lambda$), les proportions de la lumière du soleil (S) et de la lumière artificielle (K) par le fait qu'un capteur mesure deux bandes d'absorption caractéristiques (12, 14) des puissances volumiques spectrales ($I_1$, $I_2$) et que l'on calcule ensuite, au moyen d'une constante ($\gamma$), le quotient des puissances volumiques spectrales ($I_{s1}$, $I_{s2}$) de la lumière du soleil (S) pour les longueurs d'onde $\lambda_1$ et $\lambda_2$, et d'une constante ($\delta$), le quotient des puissances volumiques spectrales ($I_{k1}$, $I_{k2}$) correspondantes de la lumière artificielle (K), une puissance volumétrique spectrale ($I_{s1}$, $I_{s2}$) de la lumière du soleil (S) et/ou une puissance volumétrique spectrale ($I_{k1}$, $I_{k2}$) de la lumière artificielle (K).

2. Procédé selon la revendication 1, **caractérisé en ce que** la puissance volumique spectrale ($I_{k1}$) de la lumière artificielle (K) est calculée avec la formule

$$I_{K1} = \frac{I_1 - \gamma \cdot I_2}{1 - \gamma/\delta} = \frac{\delta(I_1 - \gamma \cdot I_2)}{\delta - \gamma} \qquad (4)$$

   et/ou la puissance volumique spectrale ($I_{s1}$)

de la lumière du soleil (S) est calculée avec la formule

$$I_{S1} = \frac{\gamma(I_1 - \delta \cdot I_2)}{\gamma - \delta} \qquad (5)$$

dans lesquelles :

$I_1$ = la puissance volumique spectrale pour une longueur d'onde $\lambda_1$

$I_2$ = la puissance volumique spectrale pour une longueur d'onde $\lambda_2$

$I_{k1}$ = la puissance volumique spectrale de la lumière artificielle (K) pour $\lambda_1$

$I_{s1}$ = la puissance volumique spectrale de la lumière du soleil (S) pour $\lambda_1$

$\gamma$ et $\delta$ sont des constantes.

3.  Procédé selon la revendication 1 ou 2, **caractérisé en ce que** l'on mesure, directement ou par photométrie, au moyen d'un premier capteur et d'un premier filtre à bande étroite (18), la puissance volumique spectrale ($I_1$) dans la.zone de la pointe (16) d'une bande d'absorption caractéristique (12) de la longueur d'onde ($\lambda_1$), et, au moyen d'un deuxième capteur et d'un deuxième filtre à bande étroite (20), la puissance volumique spectrale ($I_2$) qui est directement voisine de la bande d'absorption (12) et **en ce que** l'on calcule la proportion en lumière du soleil ($I_{s1}$) et/ou en lumière artificielle ($I_{k1}$).

4.  Procédé selon la revendication 3, **caractérisé en ce que**, de manière additionnelle, au moyen d'un troisième capteur et d'un troisième filtre à bande étroite (22), on mesure la puissance volumique spectrale ($I_3$) qui est directement voisine de l'autre côté de la bande d'absorption (12) et **en ce que** l'on calcule la proportion en lumière du soleil ($I_{s1}$) et/ou en lumière artificielle ($I_{k1}$).

5.  Procédé selon la revendication 3 ou 4, **caractérisé en ce que** l'on mesure avec le même capteur les courbes de filtrage de plusieurs filtres à bande étroite (18, 20, 22).

6.  Procédé selon la revendication 1, **caractérisé en ce que**, au moyen d'un premier capteur et d'un filtre à bande étroite (18), on mesure la puissance volumique spectrale ($I_1$) dans la zone de la pointe (16) d'une bande d'absorption caractéristique (12) de la longueur d'onde ($\lambda_1$), au moyen d'un deuxième capteur et d'un filtre à bande large (24) qui entoure le filtre à bande étroite (18) et **en ce que** l'on calcule la proportion en lumière du soleil ($I_{s1}$) et/ou en lumière artificielle ($I_{k1}$).

7.  Procédé selon la revendication 6, **caractérisé en ce que** l'on utilise un filtre à bande large (24) qui comporte un axe de symétrie pour la même la longueur d'onde ($\lambda_1$) que dans le cas du filtre à bande étroite (18).

8.  Procédé selon l'une quelconque des revendications 3 à 7, **caractérisé en ce que** l'on utilise des filtres à bande étroite (18, 20, 22) pour différentes longueurs d'onde ($\lambda_1$, $\lambda_2$, $\lambda_3$) avec une courbe de filtrage ayant une largeur (b), mesurée à la moitié de la hauteur, égale à quelques nanomètres, de préférence comprise entre 5 et 25 nm.

9.  Procédé selon l'une quelconque des revendications 3, 6 ou 7, **caractérisé en ce que** la proportion de la puissance volumique spectrale ($I_{s1}$) de la lumière du soleil (S) pour la longueur d'onde ($\lambda_1$) est calculée par la formule

$$I_{S1} = \frac{\gamma(I_1 - \delta \cdot I_2)}{\gamma - \delta} \qquad (5)$$

et la proportion de la puissance volumique spectrale ($I_{k1}$) de la lumière artificielle (K) est calculée par la formule

$$I_{K1} = \frac{I_1 - \gamma \cdot I_2}{1 - \gamma/\delta} = \frac{\delta(I_1 - \gamma \cdot I_2)}{\delta - \gamma} \qquad (4)$$

dans lesquelles :

$I_{1,2}$ = la puissance volumique spectrale pour une longueur d'onde $\lambda_1, \lambda_2$

$I_{s1}, I_{s2}$ = la puissance volumique spectrale de la lumière du soleil (S) pour $\lambda_1, \lambda_2$

$I_{k1}, I_{k2}$ = la puissance volumique spectrale de la lumière artificielle (K) pour $\lambda_1, \lambda_2$

$\gamma = I_{s1}/I_{s2}$ est une constante et

$\delta = I_{K1}/I_{K2}$ est une constante.

10. Procédé selon la revendication 4, **caractérisé en ce que** la proportion de la puissance volumique spectrale ($I_{s1}$) de la lumière du soleil (S) pour la longueur d'onde ($\lambda_1$) est calculée par la formule

$$I_{S1} = \frac{I_1 \cdot |\Delta \lambda_{23}| - I_2 \cdot |\Delta \lambda_{13}| - I_3 |\Delta \lambda_{21}|}{|\Delta \lambda_{23}| - \gamma_{21} \cdot |\Delta \lambda_{13}| - \gamma_{31} \cdot |\Delta \lambda_{21}|} \qquad (6)$$

dans laquelle

$I_3$ = la puissance volumique spectrale pour une longueur d'onde ($\lambda_3$)

$\Delta\lambda$ = la différence des longueurs d'onde $\lambda$ entre des filtres à bande étroite

$y_{21} = I_{s2}/I_{s1}$ est une constante et

$y_{31} = I_{s3}/I_{s1}$ est une constante.

**11.** Procédé selon l'une quelconque des revendications 1 et 3 à 7, **caractérisé en ce que**, à partir d'une valeur de départ de la puissance volumique spectrale ($I_s$) de la lumière du soleil (S), au moyen d'algorithmes correspondants, de préférence par un calcul itératif en boucle et par une diminution ou augmentation ultérieure par degrés par un critère de rupture, on obtient que la valeur effective fournit l'écart le plus faible par rapport à la valeur théorique pour la lumière du soleil (S).

**12.** Procédé selon l'une quelconque des revendications 1 à 7, **caractérisé en ce que** l'on utilise au moins une bande d'absorption (12, 14) de l'oxygène, de préférence dans la gamme d'une longueur d'onde $\lambda$ égale à environ 720, 740 ou 760 nm, en particulier une bande d'absorption présentant une pointe (16) de 762,1 nm.

**13.** Procédé selon l'une quelconque des revendications 1 à 12, **caractérisé en ce que** l'on mémorise et on évalue les données au moyen d'un microprocesseur.

**14.** Procédé selon l'une quelconque des revendications 1 à 13, **caractérisé en ce que** l'on détermine la variation de la durée de la lumière naturelle sur toute l'année et **en ce que** l'on compense les fluctuations saisonnières de la caractéristique d'absorption.

**15.** Utilisation du procédé selon l'une quelconque des revendications 1 à 14 pour la commande et/ou la régulation d'installations d'éclairage dans une pièce ou pour des véhicules automobiles, avec une lumière du soleil (S) variable dans les deux cas, en ne passant pas en dessous d'une puissance volumique spectrale ($I_\lambda$) réglable ou d'une densité totale de lumière de la lumière du soleil (S) et de la lumière artificielle (K).

**16.** Utilisation selon la revendication 15, **caractérisé en ce que** la puissance volumique spectrale ($I_\lambda$) ou la densité totale de lumière d'une place de travail ou de séjour est maintenue constante lorsque la lumière du soleil (S) varie en branchant la lumière artificielle (K).

**17.** Utilisation selon la revendication 15 ou 16, **caractérisé en ce que** la commande de l'installation d'éclairage est réalisée avec au moins un indicateur de présence ou d'absence.

Fig.1

Fig. 2

Fig. 3

*Fig. 4*

*Fig. 5*

Fig.6

Fig.7

Fig. 8